(19) Europäisches Patentamt
European Patent Office
Office européen des brevets

(11) EP 1 607 194 B1

(12) **EUROPEAN PATENT SPECIFICATION**

(45) Date of publication and mention
of the grant of the patent:
**29.10.2008 Bulletin 2008/44**

(51) Int Cl.:
**B25J 9/16** (2006.01)

(21) Application number: **05011702.7**

(22) Date of filing: **31.05.2005**

(54) **Robot system comprising a plurality of robots provided with means for calibrating their relative position**

Robotersystem bestehend aus mehreren Robotern mit Mitteln zur Kalibrierung ihrer relativen Lage

Système robotisé comprenant plusieurs robots munis de moyens pour calibrer leur position relative

(84) Designated Contracting States:
**DE**

(30) Priority: **02.06.2004 JP 2004165075**

(43) Date of publication of application:
**21.12.2005 Bulletin 2005/51**

(73) Proprietor: **FANUC LTD**
**Minamitsuru-gun,**
**Yamanashi 401-0597 (JP)**

(72) Inventors:
• **Ban, Kazunori**
**Minamitsuru-gun**
**Yamanashi 401-0304 (JP)**
• **Kanno, Ichiro**
**Yokohama-shi**
**Kanagawa 224-0065 (JP)**
• **Yamada, Makoto**
**Minamitsuru-gun**
**Yamanashi 401-0301 (JP)**
• **Inoue, Toshihiko**
**Fujiyoshida-shi**
**Yamanashi 403-0017 (JP)**

(74) Representative: **Schmidt, Steffen J.**
**Wuesthoff & Wuesthoff**
**Patent- und Rechtsanwälte**
**Schweigerstrasse 2**
**81541 München (DE)**

(56) References cited:
**EP-A- 1 602 456** **WO-A-03/039817**
**US-B1- 6 282 461**

• ZHENG J Y ET AL: "USE OF AN ACTIVE CAMERA FOR EYE-HAND COORDINATION IN ROBOT MANIPULATION" SYSTEMS & COMPUTERS IN JAPAN, WILEY, HOBOKEN, NJ, US, vol. 25, no. 13, 1 November 1994 (1994-11-01), pages 73-86, XP000526364 ISSN: 0882-1666
• YALOU HUANG ET AL: "Calibration of two cooperative manipulators via pseudo-closed-loop method" SYSTEMS, MAN AND CYBERNETICS, 1996., IEEE INTERNATIONAL CONFERENCE ON BEIJING, CHINA 14-17 OCT. 1996, NEW YORK, NY, USA,IEEE, US, vol. 2, 14 October 1996 (1996-10-14), pages 1465-1470, XP010207023 ISBN: 0-7803-3280-6
• BONITZ R G ET AL: "CALIBRATING A MULTI-MANIPULATOR ROBOTIC SYSTEM" IEEE ROBOTICS & AUTOMATION MAGAZINE, IEEE SERVICE CENTER, PISCATAWAY, NJ, US, vol. 4, no. 1, March 1997 (1997-03), pages 18-22, XP000688537 ISSN: 1070-9932

# Description

## BACKGROUND OF THE INVENTION

### 1. Field of the Invention

The present invention relates to a robot system including a plurality of robots or, in particular, to a technique for simply and accurately calibrating the relative positions of the robots included in the robot system. The robot system according to this invention is useful for an application, for example, in which a work is transported or machined by the collaborative cooperation of a plurality of robots.

### 2. Description of the Related Art

In a typical system using an industrial robot, there is a system in which the required job (transport, machining, etc.) is carried out by the collaborative cooperation between two robots. This system requires that a following robot calculates a target position based on the position of a leading robot. In order to calculate the target position accurately, the relative positions of the robot coordinate systems set in the respective robots must be determined in advance.

Predetermination of the relative positions of the coordinate systems of two robots, for the reason mentioned above, is a kind of calibration to couple the coordinate systems between the robots. According to a representative method of calibration, generally known, to couple the coordinate systems of the robots, a positioning jig is mounted at the forward end of an arm of each robot, and each robot is sequentially moved to at least three positions prepared in a range reachable by the robots in a three-dimensional space. In the process, the data indicating the relative positions of the robot coordinate systems set in the each robots can be determined based on the data of the present position obtained for each robot.

The method of moving a robot to at least three positions in the three-dimensional space includes a method in which the robots (the forward ends of the jigs mounted at the forward end of each robot) are brought into direct contact with each other and a method in which a fixed calibration jig is prepared at a point distant from the robots and the robots are brought into indirect contact with each other while each robot (the forward end of the jig mounted at the forward end of each robot) touches up the calibration jig.

No reference in public domain, however, describes the above-mentioned methods in sufficient detail for ordinary robots. Incidentally, the calibration of the robot and the positioner is described in Japanese Unexamined Patent Publication No. 8-129408. This patent publication proposes a method in which the robot and the positioner are brought into direct contact with each other.

The above-mentioned conventional method of calibration between robots poses several problems. Of the problems, the requirement of a positioning jig increases the cost and imposes a heavy burden on the workers. Specifically, the calibration by both direct and indirect contact requires a positioning jig at the forward end of each robot, thereby increasing the jig-related cost. In the calibration method by indirect contact, a fixed jig is required. Further, for the purpose of subsequent maintenance, this jig is required to be kept fixed while the robot system is in operation as well as at the time of teaching. This jig, therefore, cannot be shared by many robot systems. Furthermore, a large jig is required to secure calibration accuracy.

In the calibration method by direct contact, on the other hand, the rigidity of the jig at the forward end of each robot is required to be taken into consideration in order to prevent the forward end of the jig from being displaced in the case where two robots are distant from each other. Teaching also poses another problem. In the calibration by both direct and indirect contact, the calculation of the relative positions of the coordinate systems of the robots carrying the jig requires that the two robots are set in the same position and the position of the robots is stored at three or more points in the three-dimensional space. To improve the accuracy in the process, three teaching points are required to be set in as wide a range as possible and the robots are taught in such a manner that the positioning jigs coincide with each other accurately at each point. This teaching requires a high accuracy, and the contact method used for teaching is liable to cause a damage to the jig which may strike against an object due to a minor operation error (jogging error).

All these conventional methods using a jig impose a heavy burden on the user and an improvement thereto has been strongly required. This invention is intended to obviate these problems of calibration to determine the relative positions between the robot coordinate systems of the respective robots, and to realize highly accurate calibration with little burden on the user.

Document WO 03/039817 A1 discloses a robot collaboration control system. The system comprises a plurality of control units for controlling individually respective operations of a plurality of robots in synchronisation with a timing signal generated in a predetermined minimum interruption period, a communication connection means which communicatably connects control units to each other and constitutes a network, input means, storage means and timing signal generation means. The control units are installed respectively in the plurality of robots and individually control the operations of the robots in synchronisation with the timing signal generated by the timing signal generation means. This document discloses a calibration procedure wherein the tips of positioning tools removably installed at the tip of the arm of the robots are brought into direct contact with each other at least at three points in space.

# SUMMARY OF THE INVENTION

This invention obviates the above-mentioned problems by a method in which a measuring unit including a light-receiving device is mounted on one of the two robots to be calibrated or an object having a feature portion is mounted on the other robot, and in which the measurement of the feature portion (measurement of the two-dimensional feature amount including the position) by a measuring unit is combined with the relative movement of the two robots to acquire the data required for calibration.

More specifically, according to a first aspect of the invention, there is provided a robot system comprising a first robot having a first robot coordinate system set therein, a second robot having a second robot coordinate system set therein, a measuring unit including a light-receiving device mounted on selected one of the first robot or the object mounted on the first robot, a means for setting the first and second robots at each position in their initial states, a means for detecting, by the light-receiving device, the feature portion mounted on selected one of the second robot or an object mounted on the second robot, and detecting the feature portion imaged on the light-receiving surface of the light-receiving device, a means for determining, based on the detection result, the distance to be covered by the second robot in such a manner that the two-dimensional feature amount including the position of the feature portion on the light-receiving surface is coincident with a predetermined target value, a means for moving the second robot in accordance with the the determined distance to be covered by the second robot, a means for acquiring and storing the position information of the second robot after movement, and a means for calculating the relative positions of the first and second robot coordinate systems using the position information of the second robot stored for each initial state and the information of the first robot in the initial states in the case where at least three initial states are given.

According to a second aspect of the invention, there is provided a robot system further comprising a coincidence determining means for determining, before acquiring and storing the position of the second robot after movement, that the two-dimensional feature amount including the position, on the light-receiving surface of the light-receiving device, of the feature portion imaged on the light-receiving surface is coincident with a target value within a predetermined error.

According to a third aspect of the invention, there is provided a robot system further comprising a means for setting the second robot in the initial position again in the case where the coincidence determining means fails to determine the coincidence within the predetermined error.

According to a fourth aspect of the invention, there is provided a robot system comprising a first robot having a first robot coordinate system set therein, a second robot having a second robot coordinate system set therein, a measuring unit including a light-receiving device mounted on selected one of the first robot or an object mounted on the first robot, a means for setting the first and second robots in initial positions, respectively, a means for detecting, by the light-receiving device, the feature portion of the object mounted on selected one of the second robot or an object mounted on the second robot, and detecting the feature portion imaged on the light-receiving surface of the light-receiving device, a means for determining, based on the detection result, the distance to be covered by the first robot in such a manner that the two-dimensional feature amount including the position of the feature portion on the light-receiving surface is coincident with a predetermined target value, a means for moving the first robot in accordance with the determined distance to be covered by the first robot, a means for acquiring and storing the position information of the first robot after movement, and a means for calculating the relative positions of the first and second robot coordinate systems using the position information of the first robot stored for each initial state and the position information of the second robot in the initial states in the case where at least three initial states are given.

According to a fifth aspect of the invention, there is provided a robot system further comprising a coincidence determining means for determining, after movement and before acquiring and storing the position of the first robot, that the two-dimensional feature amount including the position, on the light-receiving surface of the light-receiving device, of the feature portion imaged on the light-receiving surface coincides with the target value within a predetermined error.

According to a sixth aspect of the invention, there is provided a robot system further comprising a means for again setting the first robot at a position in the initial states in the case where the coincidence determining means fails to determine the coincidence within the predetermined error.

According to a seventh aspect of the invention, there is provided a robot system, wherein the first and second robots are connected to different robot control units adapted to be connected by a communication means.

According to an eighth aspect of the invention, there is provided a robot system wherein the first and second robots are connected to the same robot control unit.

According to a ninth aspect of the invention, there is provided a robot system wherein the measuring unit is temporarily mounted to calculate the relative positions between the first and second robots.

According to a tenth aspect of the invention, there is provided a robot system wherein the feature portion is provided temporarily to calculate the relative positions between the first and second robots.

According to an 11th aspect of the invention, there is provided a robot system wherein the light-receiving device mounted on the measuring unit is a camera for capturing a two-dimensional image.

According to a 12th aspect of the invention, there is provided a robot system, wherein the light-receiving device mounted on the measuring unit is a PSD (position sensing detector).

According to the invention, the calibration to determine relative positions of the robots can be carried out in simple fashion in non-contact way with high accuracy. As a result, the cost related to the teaching and the jigs that has thus far been paid by the user can be reduced in the robot system using a plurality of robots at the same time.

These and other objects, features and advantages of the present invention will be more apparent in light of the following detailed description of exemplary embodiments thereof as illustrated by the drawings.

BRIEF DESCRIPTION OF THE DRAWINGS

Fig. 1 is a diagram showing schematically a general configuration according to an embodiment of the invention.

Fig. 2 is a diagram showing an example of a block configuration of a robot control unit according to an embodiment.

Fig. 3 is a diagram showing an example of a block configuration of an image processing unit according to an embodiment.

Fig. 4 is flowchart schematically showing preparatory steps executed according to an embodiment.

Fig. 5 is a diagram showing the relation between the position of the feature portion and the camera position in a target value setting reference state.

Fig. 6 is a diagram showing an example of an image of the feature portion in the target value setting reference state.

Fig. 7 is a flowchart for explaining the calibration steps executed according to an embodiment.

Fig. 8 is a diagram for explaining the movement to attain coincidence of the position and the size of the feature portion with the target value on the image according to an embodiment.

Fig. 9 is a flowchart for explaining the steps of the movement to attain coincidence of the position and the size of the feature portion with the target value on the image according to an embodiment.

Fig. 10 is a diagram showing a modification including a single robot control system.

Fig. 11 is a flowchart showing an outline of the steps to determine the position Sf' of a feature portion representing point as viewed from Σf'.

Fig. 12 is a diagram showing the manner in which the feature portion representing point is moved to the predetermined point M.

Fig. 13 is a diagram for explaining the process of step T4.

Fig. 14a shows the manner in which the coordinate system Σv1 is moved rotationally for explaining the process of step T8.

Fig. 14b shows the relation between the rotational movement and the position of the coordinate system Σv2 for explaining the process of step T8.

Fig. 15 is a diagram for explaining the process to determine Sf'.

Fig. 16 is a flowchart showing an outline of the steps to determine the position Vf of the feature portion representing point as viewed from Σf.

Fig. 17 is a diagram for explaining the process of step T4'.

Fig. 18a shows the manner in which the coordinate system Σv1 is rotationally moved for explaining the process of step T8'.

Fig. 18b shows the relation between the rotational movement and the position of the coordinate system Σv2 for explaining the process of step T8'.

Fig. 19 is a diagram for explaining the process to determine the three-dimensional position of the feature portion representing point.

DETAILED DESCRIPTION

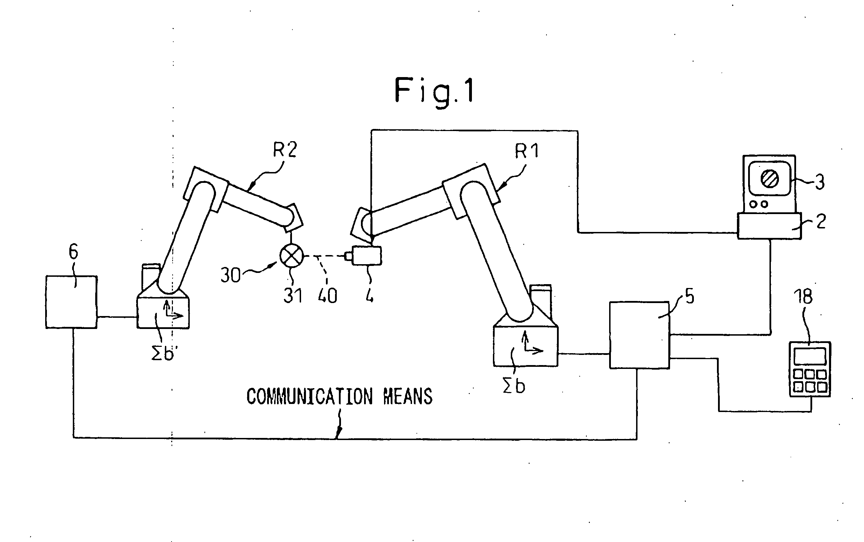

Embodiments of the invention are explained sequentially below with reference to the drawings. First, Fig. 1 is a schematic diagram showing a general configuration of an embodiment of the invention. In Fig. 1, robots R1 and R2 to be calibrated are connected to robot control units 5 and 6, respectively.

A camera 4 is mounted at the forward end of the arm of the robot R1 (the first robot). The camera 4 is a CCD camera, for example, which is a well-known light-receiving device having the function of detecting a two-dimensional image on the light-receiving surface (the CCD array surface). As described later, the light-receiving device may alternatively be a PSD (position sensing detector). The camera 4 is connected to an image processing unit 2 having an LCD or a CRT monitor 3.

A feature portion 30 is prepared at the forward end of the arm of the other robot (the second robot) R2. The feature portion 30 may be a feature portion unique to the robot R2 for example a bolt head, a bolt hole, a mark printed on the machine body, etc. or an object mounted with a mark drawn for calibration. As another alternative, a feature 30 for calibration may be drawn anew at the forward end of the arm of the robot R2. Reference numeral 31 designates a point (feature portion representing point) representing the position of the feature portion 30. As described later, according to this embodiment, the feature portion 30 is a mark having a circular contour and the feature portion representing point 31 is a center point of the circular contour.

The feature portion 30 is sufficient to be fixed while the calibration job described later is going on, and can of course be removed before and after the calibration process. This is also as in the case with the camera 4 mounted on the robot R1, which camera 4 is fixed while the calibration is underway, and can be freely removed before and after the calibration. Nevertheless, the camera 4 may be kept mounted on the robot R1 after calibration, and may be used as a head of the visual sensor for the actual work (handling, etc.). Also, the feature portion 30, if drawn for calibration, may be erased after calibration.

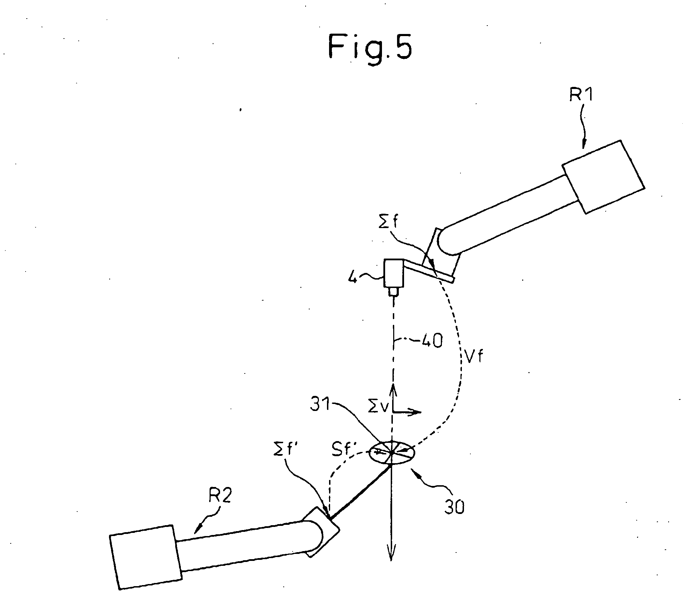

The robot R1 has set therein a robot coordinate system Σb fixed on the robot base and a mechanical interface coordinate system Σf (not shown in Fig. 1 but Fig. 5) fixed on the tool mounting surface. In the robot control unit 5, the position and posture (present position) of the origin of the mechanical interface coordinate system (Σf) can be determined at any time before calibration.

In similar fashion, the robot R2 has set therein a robot coordinate system Σb' fixed on the robot base and a mechanical interface coordinate system Σf' (not shown in Fig. 1 but shown in Fig. 5) fixed on the tool mounting surface. In the robot control unit 6, the position and posture (present position) of the origin of the mechanical interface coordinate system (Σf') can be determined at any time before calibration.

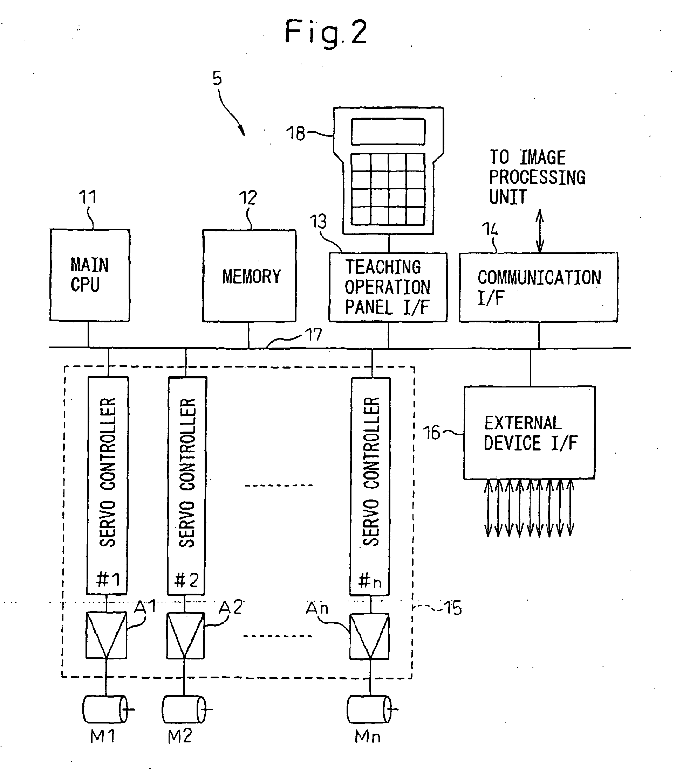

The robot control unit 5 has a well-known block configuration as shown in Fig. 2. Specifically, a memory 12 such as a RAM, a ROM or a nonvolatile memory, a teaching operation panel interface 13, a communication interface 14, a servo control unit 15 and an external device input/output interface 16 are connected in parallel to each other to a bus 17 connected to a main CPU (hereinafter referred to simply as the CPU) 11.

The servo controllers #1 to #n (n: the number of axes of the robot R1, and 6 in this case) of the servo control unit 15, upon receipt of a move command prepared through an arithmetic operation (forming a tracking plan and the corresponding interpolation and inverse transform) for controlling the robot R1, outputs a torque command to each servo amplifier together with a feedback signal received from a pulse coder (not shown) associated with each robot axis.

The servo amplifiers A1 to An supply a current to and drive the servo motor of each axis based on each torque command. The communication interface 14 is connected to the image processing unit 2 and the communication interface (not shown) of the robot control unit 6 (Fig. 1) of the second robot R2 through communication lines. Through these communication lines, the commands related to measurement, the measurement result data, the present position data of the robots R1, R2, described later, are exchanged between the image processing unit 2 and the robot control unit 6.

The configuration and functions of the robot control unit 6 are similar to those of the robot control unit 5 and are not described in detail. The teaching operation panel interface and the teaching operation panel, however, are not shown in the robot control unit 6. Specifically, the teaching operation panel 18 connected to the teaching operation panel interface 13 is shared by the robots R1 and R2, and the operator, by manual operation of the teaching operation panel 18, creates, corrects and registers the operation program (including the collaborative operation program, as required) of the robots R1, R2, sets the various parameters, regenerates and executes the taught operation program, and jogs the robots R1, R2. The system program supporting the basic functions of the robots R1, R2 and the robot control units 5, 6 is stored in the ROM of the memory 12.

Also, the robot operation program (a work handling program, for example) taught in accordance with an application and the related setting data are distributed to and stored appropriately in the nonvolatile memory of the memory 12 of the robot control unit 5 and a similar memory (not shown) of the robot control unit 6.

The program for the various processes described later (the processes for robot movement related to calibration and communication with the image processing unit thereof) and the data such as parameters are also stored in the nonvolatile memory of the memory 12. The RAM of the memory 12 is used for the area to temporarily store the data for the various arithmetic operations performed by the main CPU 11. The RAM of the memory in the robot control unit 6 is also used as a storage area to temporarily store the data for the various arithmetic operations performed by the main CPU (not shown) of the robot control unit 6.

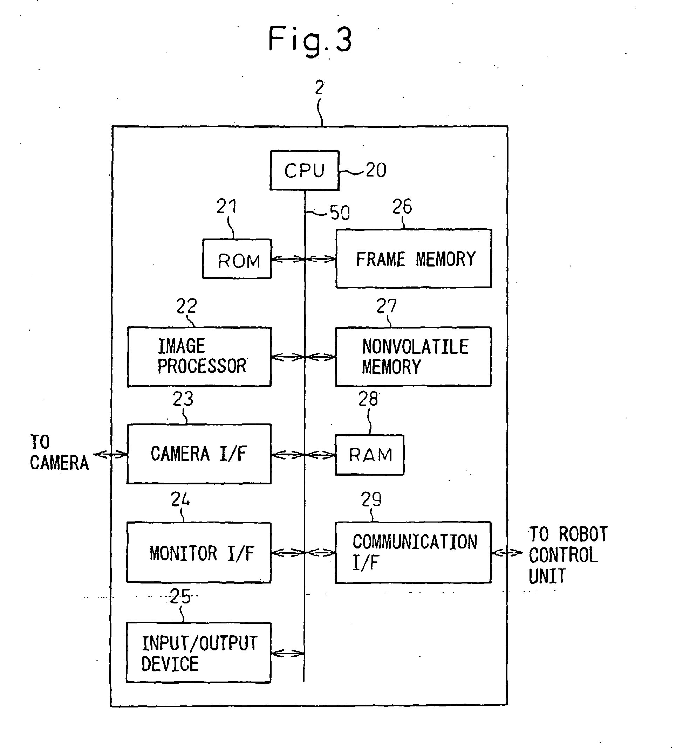

The image processing unit 2 has a well-known block configuration as shown in Fig. 3. Specifically, the image processing unit 2 includes a CPU 20 having a microprocessor, and the CPU 20 is connected, through a bus line 50, with a ROM 21, an image processor 22, a camera interface 23, a monitor interface 24, an input/output (I/O) device 25, a frame memory (image memory) 26, a nonvolatile memory 27, a RAM 28 and a communication interface 29.

The camera interface 23 is connected with a camera (the camera 4 in this case, as shown in Fig. 1) as an image capturing means. Upon receipt of an image capturing command through the camera interface 23, the image capturing operation is carried out by the electronic shutter function set in the camera 4, and an image signal thereof is stored in the frame memory 26 in the form of a gray scale signal through the camera interface 23. The monitor interface 24 is connected with a monitor (the monitor 3 in this case, as shown in Fig. 1), so that the image being picked up by the camera, the past image stored in the frame memory 26 and the image processed by the image processor 22 are displayed as required.

On the assumption of the configuration and the functions described above, the steps of determining the relative positions and postures of the robot coordinate system Σb set in the first robot R1 and the robot coordinate system Σb' set in the second robot R2 using the technical concept of the invention are explained below. The light-receiving device, though described as a camera (CCD camera) connected to the image processing unit 2, may, of course, be appropriately replaced with another light-receiving device and a corresponding signal processor.

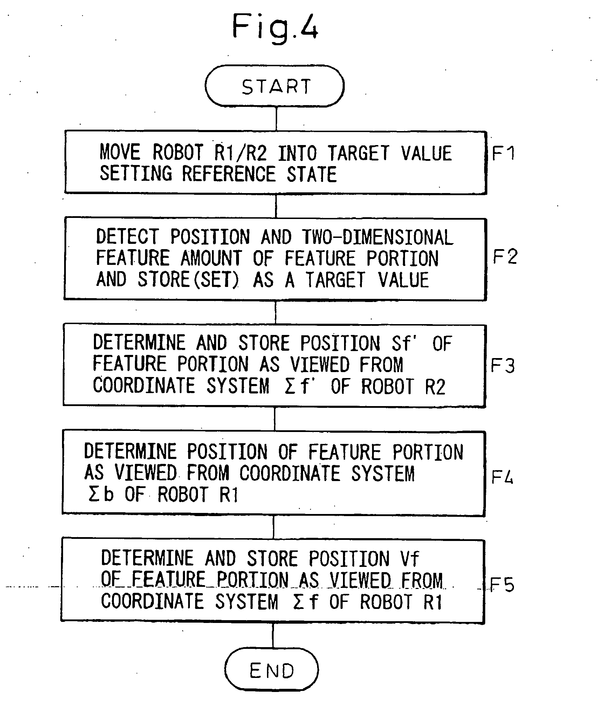

First, the required preparation steps are executed as shown in the flowchart of Fig. 4. Each step is briefly described below.

Step F1:

At least one of the robots R1, R2 is moved into "the target value setting reference state". In the target value setting reference state, the robots R1,-R2 may be generally set in an arbitrary position as long as the feature portion 30 can be caught in an appropriate size in the visual field of the camera 4. Using the teaching operation panel 18, for example, at least one of the robots R1, R2 is jogged and set in position with the camera 4 in substantially squarely opposed relation (Fig. 1) at an appropriate distance with the feature portion 30. This state is defined as "the target value setting reference state".

Fig. 5 shows the relation between the position of the feature portion 30 and the camera mounting position in the target value setting reference state. In Fig. 5, reference numeral 40 designates a straight line (view line) connecting the center of the lens of the camera 4 and the feature portion representing point 31. Also, Vf designates the position (matrix) of the feature portion representing point 31 as viewed from the mechanical interface coordinate system $\Sigma f$ fixed on the tool mounting surface of the robot R1, and Sf' designates the position (matrix) of the feature portion representing point 31 as viewed from the mechanical interface coordinate system $\Sigma f'$ fixed on the tool mounting surface of the robot R2.

Step F2:

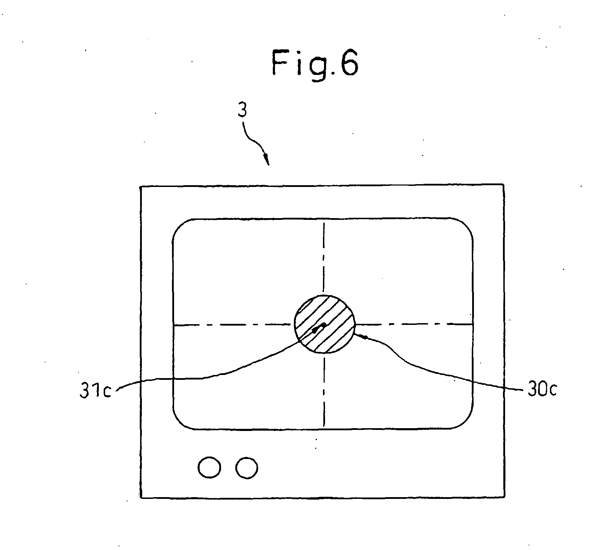

In the target value setting reference state, an image is picked up by the camera 4 and the two-dimensional feature amount including the position of the feature portion 30 on the screen is detected. According to this embodiment, the position and the size of the feature portion 30 on the light-receiving screen (the position of the feature portion representing point 31 on the light-receiving screen) are detected and stored (set) as a "target value". An example of image of the feature portion 30 in the target value setting reference state is shown in Fig. 6. In this case, the state in which the circular feature portion 30 and the camera 4 are in substantially squarely opposed relation to each other is defined as the target value setting reference state, and therefore a circular image 30c is displayed at about the center of the screen. Reference numeral 31c designates the center point of the image. Generally, taking the possibility of viewing the circular feature portion 30 diagonally from the camera 4, "the size of the feature portion 30 on the light-receiving surface" is represented by "the maximum diameter (the diameter along the long axis of an ellipse) of the feature portion 30 on the light-receiving surface".

Step F3:

The position of the feature portion 30 mounted on the second robot R2, i.e. the position (matrix) Sf' of the feature portion representing point 31, as viewed from the mechanical interface coordinate system $\Sigma f'$ fixed on the tool mounting surface of the robot R2, is measured using the camera 4 and the image processing unit 2. This measurement can use the method described in the specification and the drawings of Japanese Unexamined Patent Publication No. 2004-113451, as the feature thereof is described later.

Step F4:

The position of the feature portion 30 mounted on the second robot R2, i.e. the position (matrix) Sf of the feature portion representing point 31 as viewed from the robot coordinate system $\Sigma b$ of the robot R1 is measured using the camera 4 and the image processing unit 2 and the result thereof stored. This measurement can use the method described in the specification and the drawings of Japanese Unexamined Patent Publication No. 2004-9848, as a summary thereof is described later.

Step F5:

Based on the present position (the position of $\Sigma f$ on $\Sigma b$) of the robot R1 with the same result as of step F4, the position of the feature portion 30, i.e. the position (matrix) Vf of the feature portion representing point 31, as viewed from the mechanical interface coordinate system $\Sigma f$ fixed on the tool mounting surface of the robot R1, is stored, and the preparatory process is completed.

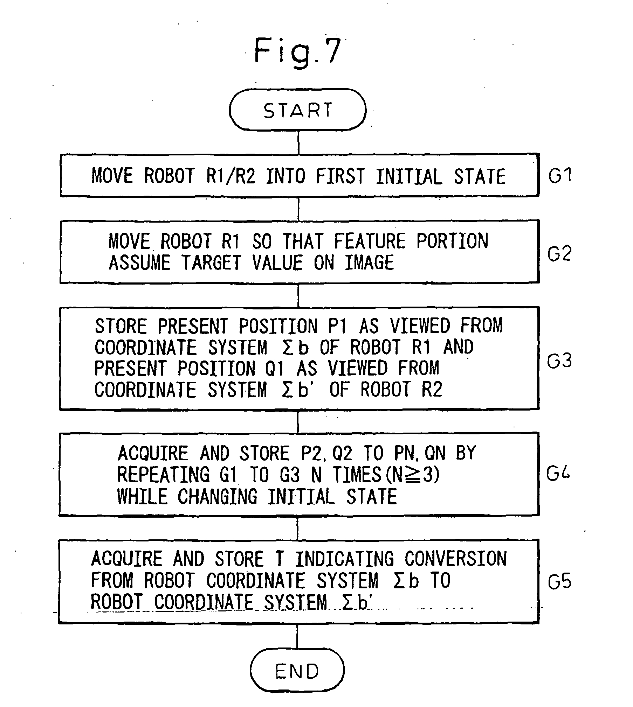

After this preparatory process, the steps shown in the flowchart of Fig. 7 are executed. Each step is briefly described below.

Step G1:

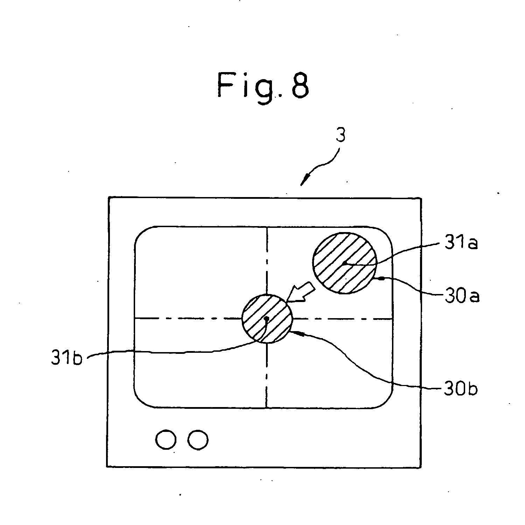

The first robot R1 and the second robot R2 are moved into the first initial positions, respectively. Generally, the first initial positions (the first initial position of the robot R1 and the first initial position of the robot R2), the second and third initial positions described later, may be generally arbitrarily determined in a three-dimensional space as long as the feature portion 30 of an appropriate size can be caught in the visual field of the camera 4. In the initial positions, the camera 4 and the feature portion 30 are generally slightly displaced from the position corresponding to the above-mentioned target value (the neighborhood of the center of the light-receiving surface in this embodiment, as shown in Fig. 6). In this case, the state in which the position of the feature portion (image) as designated by 30a in Fig. 8 can be obtained on the monitor 3 by the image capturing operation of the camera 4 is defined as the first initial state. Reference numeral 31a designates the center position (position of the feature portion representing point) of the feature portion position 30a. The movement into the initial state is carried out by the jogging using, for example, the teaching operation panel 18.

Step G2:

From the first initial state, the first robot R1 is moved in such a manner as to obtain the target value described above. In Fig. 8, reference numeral 30b designates an image of the feature portion 30 corresponding to the target value. Reference numeral 31b designates the center position of the image 30b of the feature portion 30 (position of the feature portion representing point).

This movement is carried out by a comparatively simple method. First, by moving the first robot R1 a predetermined amount in each of X, Y and Z directions on Σf, the direction of movement and the change in size on each image are observed, so that the relation between the distance to be covered by the first robot R1 (Σf) in the three-dimensional space and the change in the target value on the image (the change in the covered distance and size on the image) is determined, followed by moving the robot R1.

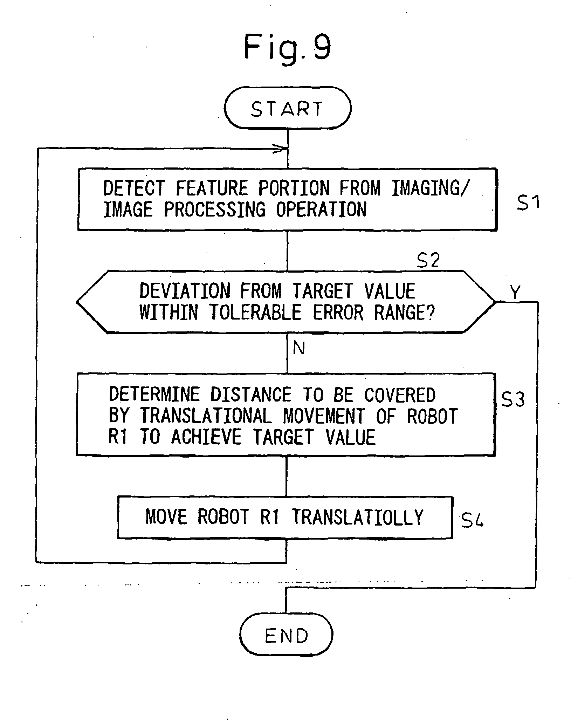

This method is well known and is not explained in detail, and the flowchart of steps before the position and size of the feature portion 30 on the image coincide with the target value is shown in Fig. 9. First, an image is picked up to detect the feature portion (step S1). The detection result is checked to determine whether the position and size are within the tolerable error range preset for the target value (step S2) and, in the case where they are within the tolerable error range, the process is terminated. For example, in the case where the position and size are both deviated not more than 0.1% from the target value, they are assumed within the tolerable error range.

In the case where the position and size are not within the tolerable error range, on the other hand, the distance to be covered by the first robot R1 is determined based on the present detection result (step S3). This distance to be covered is determined assuming a translational movement without changing the posture of Σf. Then, the translational movement thus determined is carried out (step S4), and the process is returned to step S1. This process is repeated until the detection result finally coincides with the target value.

Step G3:

Once the target value is achieved, the present positions of both the first robot R1 and the second robot R2 are acquired and stored. The present positions of the robots R1, R2 are designated as P1, Q1, respectively.

Step G4:

Steps G1 to G3 are repeated N times (N ≥ 3) while changing each position of the initial state at step G1. In the case where N = 3, for example, three initial positions are selected for each of the robot R1 and the robot R2, and three initial states are created. Nevertheless, the three initial positions of the robot R1 and the three initial positions of the robot R2 are prohibited from being aligned on one straight line.

Step G5:

Based on the positions P1,...,PN of the robot R1 and the positions Q1,....,QN of the robot R2 obtained by N repetitive above operations, a matrix T indicating the coordinate conversion from Σb to Σb' is determined. Equations to be solved for this purpose are determined in the manner described below.

Specifically, the equation described below holds for each of the position sets Pi,Qi (i = 1 to N), and therefore T can be obtained by solving them as simultaneous equations.

$$T*Qi*Sf' = Pi*Vf$$

where only the data Sf' and Vf already stored in the preparatory process described above are used.

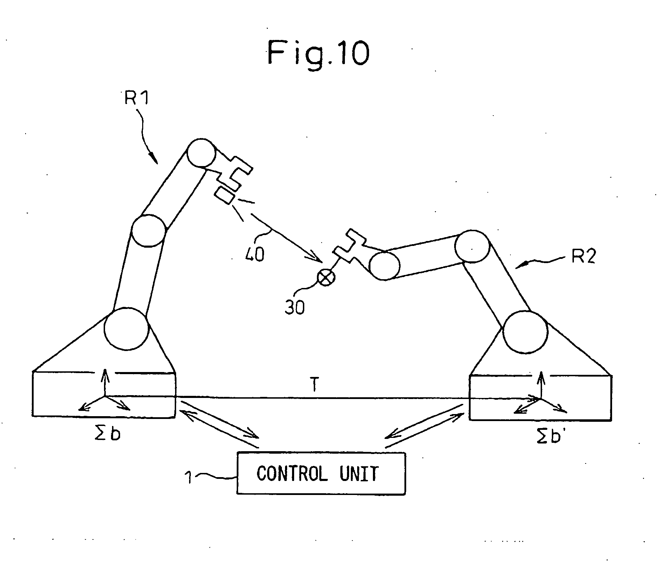

These simultaneous equations can be solved by a well known method not described in detail herein. Also, in spite of the movement of the robot R1 having the feature portion 30 described above to realize the target value, it is a relative matter whether the camera or an object to be measured should be moved, and therefore, it is easily understood that T can of course be calculated by a similar method of achieving the target value by moving the robot R2. Further, in spite of the foregoing description of different control units being connected by a communication line, a single control unit may be employed as indicated by reference numeral 1 in Fig. 10 to control both the first and second robots. In such a case, the communication line otherwise required between the two robot control units in the above can be eliminated. In Fig. 10, the camera 4 and the image processing unit connected to the robot control unit 1 are not shown.

Finally, the method of determining "the position (matrix) Sf' of the feature portion representing point 31 as viewed from the mechanical interface coordinate system Σf' of the robot R2" and "the position (matrix) Vf of the feature portion representing point 31 as viewed from the robot coordinate system Σb of the robot R1" is briefly explained. First, the method of determining Sf' is described.

In Fig. 5, the view line 40 of the camera 4 is shown. The view line 40 is a straight line directed from the representing point (such as the center of the lens) of the camera 4 toward the feature portion representing point 31. With regard to the view line 40, the coordinate system Σv is shown in Fig. 5. Specifically, the coordinate system Σv is assumed to represent the view line 40 directed from the representing point (such as the center of the lens) of the camera 4 toward the feature portion representing point 31, in the coordinate system $\Sigma v$, the origin is located on the view line 40, and one coordinate axis (such as Z axis) coincide with the view line 40. Also, as described above, $\Sigma f$ is a mechanical interface coordinate system fixed on the tool mounting surface of the robot R1, and $\Sigma f'$ the mechanical interface coordinate system fixed on the tool mounting surface of the robot R2.

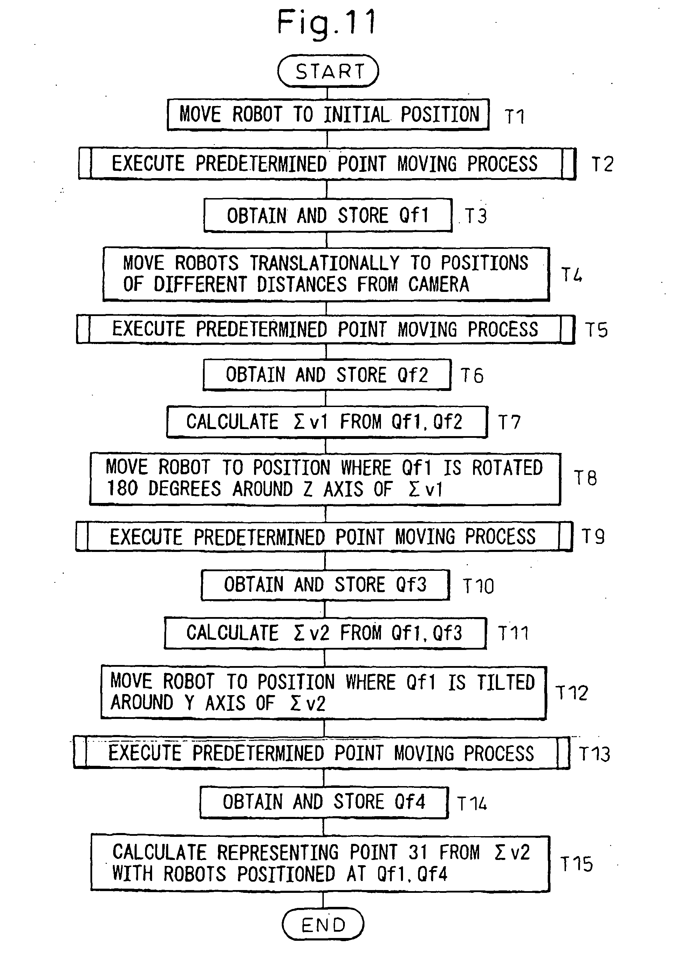

The steps of determining the position Sf' of the feature portion representing point 31 as viewed from $\Sigma f'$ are briefly shown in the flowchart of Fig. 11. In the flowchart of Fig. 11, the "robot" indicates the robot R2.

[Steps T1 and T2]

With the configuration described above, the relative position of the feature portion representing point 31 is determined based on "the determination of the view line 40". Generally, the view line is determined by what is called camera calibration. In this example, however, such a method is not required. Specifically, in order to acquire the information on the view line 40 without using the method of camera calibration, the basic idea is to move the robot so that the position of the feature portion representing point 31 on the light-receiving surface is moved toward (reaches) a predetermined point on the light-receiving surface. The term "a predetermined point on the light-receiving surface" is specifically predefined as "a predetermined point" such as "the center point of the light-receiving surface (geometric position of the center of gravity)". Therefore, this process is hereinafter sometimes called "the predetermined point moving process".

First at step T1, the robot R2 is moved to the appropriate initial position (the robot is set at the initial position) where the camera 4 can detect the feature portion representing point 31 in its visual field. Next, the predetermined point moving process (step T2) is executed as described below. Specifically, the tool 30 is moved (by moving the robot) in such a direction that the feature portion representing point 31 grasped by the light-receiving device (camera, PSD, etc.) is directed toward "a predetermined point on the light-receiving surface", and in this way, the process is executed whereby the feature portion representing point 31 actually comes to coincide with the predetermined point within a predetermined error on the light-receiving surface.

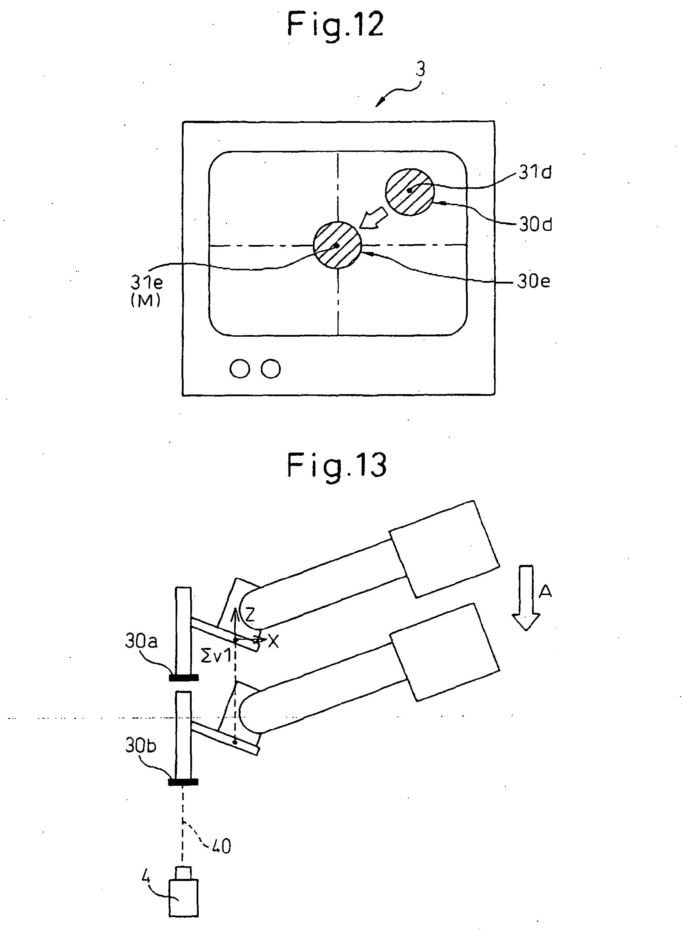

The "target value" stored in step F2 is used as the "predetermined point on the light-receiving surface". Fig. 12 shows the manner, on the monitor screen, in which the feature portion representing point 31 coincides with the "target value". In Fig. 12, the screen of the monitor 3 is set in such a manner that the point M corresponds to the "target value". If the robot R2 is set at an appropriate initial position, the images 30d, 31d of the feature portion 30 and the feature portion representing point 31, respectively, are displayed at the shown positions.

In this case, the robot R2 is moved in such a direction that the image 31d moves diagonally toward point M at a lower left portion on the screen. This is comparatively simple as it is a movement similar to the robot movement to realize the target value described above. Specifically, the robot R2 is moved in several (plural) arbitrary directions in the XY plane of the mechanical interface coordinate system $\Sigma f'$, for example, and the direction in which the image 31d of the feature portion representing point moves on the image is observed each time. In this way, the process is executed to determine the relation between the direction in which the image 31d of the robot R2 moves and the direction in which the image 31d of the feature portion representing point moves on the image is observed. In this way, the process is executed to determine the relation between the direction in which the robot R2 moves and the direction in which the tool center point moves on the image, and the relation between the movement covered by the robot and the movement covered by the tool center point on the image.

This method of determining the direction of movement and the ratio of the covered distances is well known and therefore not described in detail. Also, the description that follows assumes the above process is already done. A specific example of the process to attain coincidence the feature portion representing point (image 31d) of which the image is picked up by the camera 4 with the predetermined point M on the image is similar to the process shown in the flowchart of Fig. 9. Therefore, the process executed at each step is described below only briefly.

First, the image of the feature portion 30 is detected, and the position 31d of the feature portion representing point 31 on the image is obtained in the image processing unit 2. Then, it is judged whether the position thus determined is coincident with a predetermined point M on the image within a preset tolerable error range. In the case where the position is coincident within the predetermined tolerable error range (the image 31e coincident with point M), the predetermined point moving process is completed. In the case where the position fails to be coincident within the predetermined tolerable error range, on the other hand, a robot translational move command (with a predetermined posture of the coordinate system $\Sigma f'$) to move the image 31d to the predetermined point M (image 31e) on the image is calculated. Based on this calculation, the robot R2 is moved, and upon complete movement, the coincidence is checked again. This cycle is repeated in similar fashion until the "coincidence" is determined.

[Step T3]

The "predetermined point moving process" is described above. Upon completion of this process, i.e. once the robot is completely moved to the position where the image of the feature portion representing point designated by reference numeral 31e is obtained at the predetermined point M by the predetermined point moving process from the initial robot position where the image of the feature portion representing point designated by reference numeral 31d is displayed in Fig. 12, then the position Qf1 of the coordinate system Σf' on the robot coordinate system Σb' is acquired and stored.

[Step T4]

Next, the process to determine the direction of the view line 40 is executed. As long as the image of the feature portion representing point is focused at the predetermined point M, the view line 40 is a straight line connecting the point M on the light-receiving surface of the camera corresponding to the predetermined point M and the feature portion representing point 31. At this step, the direction in which the straight line is arranged on the mechanical interface coordinate system Σf' of the robot is determined. For this purpose, first, the robot R2 is moved translationally by the process of step T4. Fig. 13 is a diagram for explaining this process. In Fig. 13, the coordinate system Σv1 is conceived to determine the direction of the view line 40 and assumed to satisfy the following conditions.

(I) The coordinate system Σf' and the coordinate system Σv1 have the same origin.
(II) The Z axis of the coordinate system Σv1 is coincident with the direction of the view line 40.

The direction of Z axis of the coordinate system Σv1. on the coordinate system Σf' is determined at the time of completion of the predetermined point moving process. More specifically, the component (W, P) of the Euler's angle (W, P, R) indicating the posture of the coordinate system Σv1 on the coordinate system Σf' is determined.

For this purpose, first, the translational motion is executed at step T4. In the motion, the robot R2 is moved (arrow A) translationally to a position where the distance between the feature portion representing point 31 and the camera is different from the initial. difference without changing the tool posture. In Fig. 13, reference numerals 30a, 30b designate the tool before and after movement, respectively.

[Steps T5, T6]

Generally, after the translational motion at step T4, the image of the feature portion representing point 31 is displaced out of the predetermined point M again. Thus, the predetermined point moving process is executed again (step T5). In the predetermined point moving process, as described at step T2, the image of the feature portion representing point 31 is returned to the position within the tolerable error range from the predetermined point M again. Upon completion of step T5, the position Qf2 of the coordinate system Σf' on the robot coordinate system Σb' is acquired and stored (step T6).

[Step T7]

The straight line connecting the position Qf1 obtained at step T3 and the position Qf2 obtained at step T6 indicates the direction of the view line 40. If the relative covered movement from Qf1 to Qf2 as viewed on the coordinate system Σf' before robot movement at step T4 is dX, dY, dZ, the Euler's angle (W, P, R) indicating the posture of the coordinate system Σv1 on the coordinate system Σf' can be calculated as below. The coordinate system Σv1 is thus determined and the Z axis of this coordinate system indicates the direction of the view line 40.

$$W = \tan^{-1}\left(\frac{-dY}{\sqrt{(dX)^2 + (dZ)^2}}\right)$$

$$P = \tan^{-1}\left(\frac{dX}{dZ}\right)$$

$$R = 0$$

[Steps T8, T9, T10, T11]

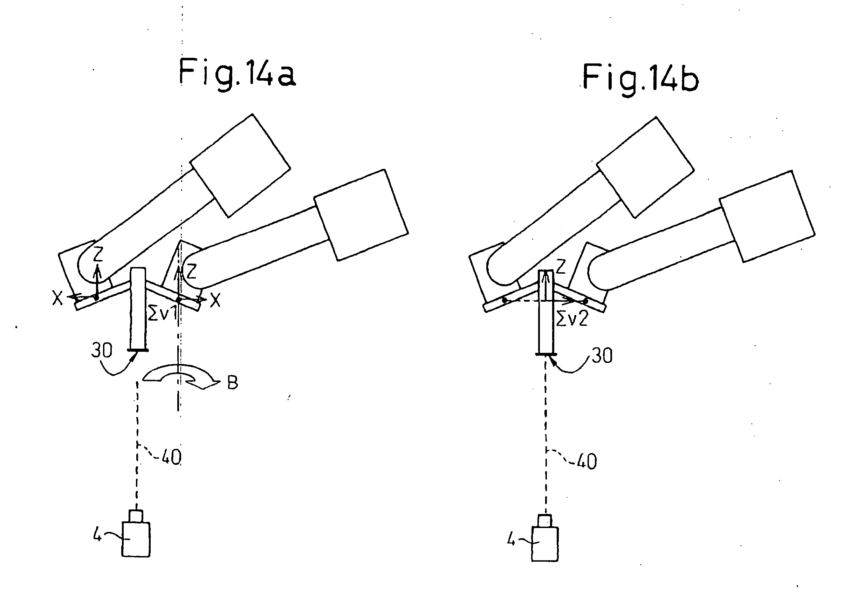

After determining the direction of the view line 40 at step T7, the process proceeds to the step of determining the position of the view line 40. Figs. 14a, 14b are diagrams for explaining this process. In Fig. 14b, the coordinate system Σv2 indicates the position and direction of the view line 40, corresponds to the coordinate system Σv in Fig. 5 and satisfies the following conditions.

(III) The coordinate system Σv2 has the origin on the view line 40.
(IV) The Z axis of the coordinate system Σv2 coincides with the direction of the view line 40.

The direction of the view line 40 is already determined as Z axis of the coordinate system Σv1 (Fig. 14a) and the Z axis of the coordinate system Σv2 is in the same direction as the Z axis of the coordinate system Σv1. To determine the position of the origin, the robot is moved to the position in which Qf1 is rotated by 180 degrees around Z axis of the coordinate system Σv1 (step T8), and then the predetermined point moving process is executed again (step T9). Fig. 14a shows the state of the rotational movement (arrow B) and the state in which the movement by the predetermined point moving process are completed, and Fig. 14b shows the position of the origin of the coordinate system Σv2. The position of the origin of the coordinate system Σv2 is given as the midpoint of the coordinate system Σf' before and after the rotational movement.

After complete rotational movement, the robot position Qf3 is acquired and stored (step T10). Then, the midpoint between Qf1 and Qf3 is determined as the origin of the coordinate system Σv2.

The relative covered movement from Qf1 to Qf3 as viewed on the coordinate system Σf' before a robot movement at step T8 is assumed to be dX, dY, dZ, respectively, and the origin (X, Y, Z) of the coordinate system Σv2 as viewed on the coordinate system Σf' is determined from the below equations. The posture of the coordinate system Σv2 is identical with that of the coordinate system Σv1, and therefore the position and posture of the coordinate system Σv2 as viewed on the coordinate system Σf' before robot movement at step T8 can be determined (step T11). The matrix indicating this is hereinafter expressed as V.

$$X = dX/2$$

$$Y = dY/2$$

$$Z = dZ/2$$

[Steps T12, T13, T14, T15]

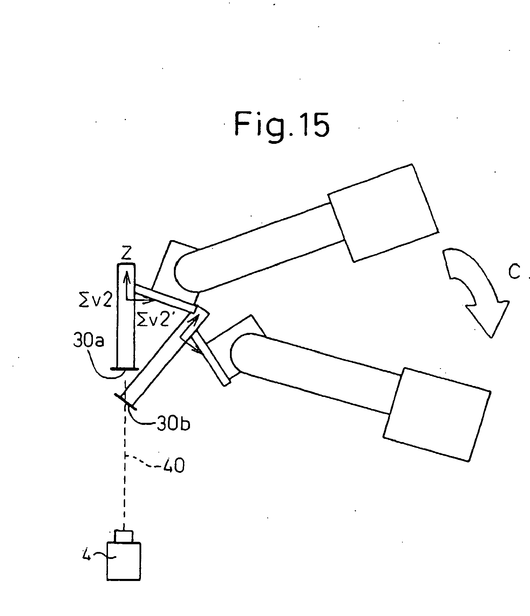

Finally, the process of determining the position of the feature portion representing point is executed using the position and posture of the view line 40. Fig. 15 is a diagram for explaining this process. The robot is tilted and moved to the position where Qf1 is tilted around the Y axis of the coordinate system Σv2 (step T12). Then, the predetermined point moving process is executed again (step T13). Fig. 15 shows the state including tool 30b after completion of this process (the coordinate system Σv2 is moved to the coordinate system Σv2'). Incidentally, numeral 30a designates the feature portion before the robot is tilted and moved. After completion of step T13, the robot position Qf4 is acquired (step T14) and stored.

The coordinate system Σv2' as viewed from the coordinate system Σf' when the robot is positioned at position Qf4 is represented as V, and the coordinate system Σv2 with the robot set in position at Qf1 is expressed as

$$Qf4^{-1} \cdot Qf1 \cdot V$$

By determining the intersection between the Z axes of the two coordinate systems, the position of the feature portion representing point 31 (the position on the coordinate system Σb') can be determined for the robot position Qf4. This is converted into Sf' using the robot position Qf4 thereby to determine the position Sf' of the feature portion representing point 31 on the coordinate system Σb' (step T15).

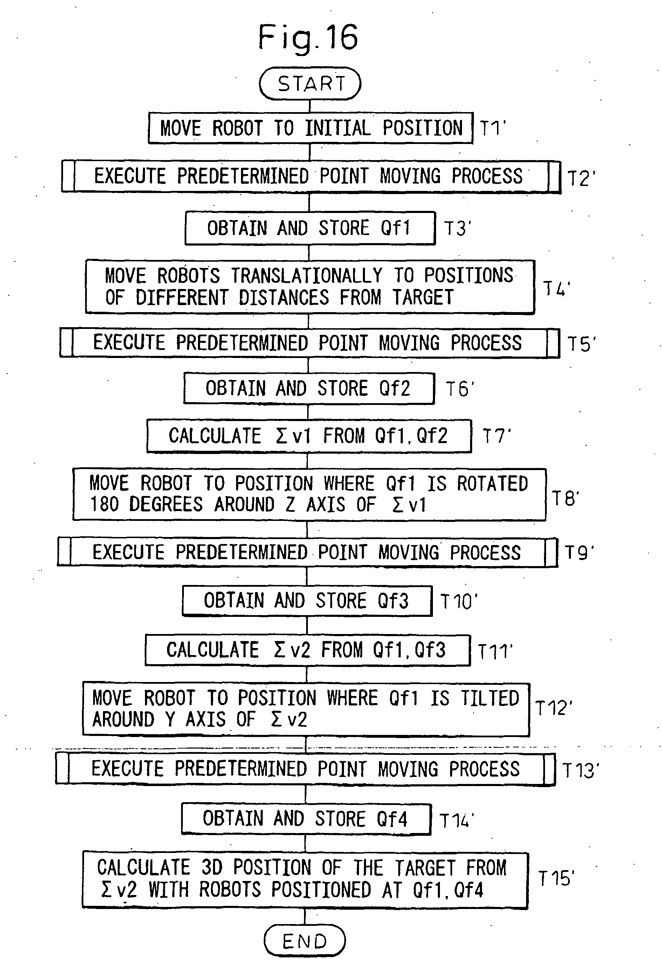

Next, the method of determining Vf is described. The steps to determine the position Vf of the feature portion representing point 31 as viewed from Σf are briefly shown in the flowchart of Fig. 16. In the flowchart of Fig. 16, the "robot" indicates the robot R1. The same reference numerals as in the flowchart of Fig. 11 are partly used for convenience' sake, and these reference numerals should be understood to be effective only in the flowchart of Fig. 16 and the related description.

[Steps T1', T2']

The predetermined point moving process, which is similar to the process of steps T1, T2 and not described in detail, is in short the process in which the light-receiving device is moved in such a direction that the feature portion representing point 31 caught by the light-receiving device (camera, PSD, etc.) proceeds toward a "predetermined point on the light-receiving surface", and the feature portion representing point 31 is actually rendered to coincide with the predetermined point within a predetermined tolerable error on the light-receiving surface. Also in this case, the "target value" stored in step F2 is employed as the "predetermined point on the light-receiving surface (predetermined point M)".

[Step T3']

Upon completion of the predetermined point moving process, i.e. upon complete movement to the robot position where the image of the feature portion representing point is obtained at the predetermined point M, the position Qf1 of the coordinate system Σf on the robot coordinate system Σb is acquired and stored.

[Step T4']

Next, the process to determine the direction of the view line 40 is executed. As long as the image of the feature portion representing point is focused at the predetermined point M, the view line 40 is a straight line connecting the point M on the light-receiving surface of the camera corresponding to the predetermined point M and the feature portion representing point 31. At this step, the direction in which this straight line is arranged on the mechanical interface coordinate system Σf of the robot R1 is determined. For this purpose, first, the robot R1 is moved translationally by the process of step T4'.

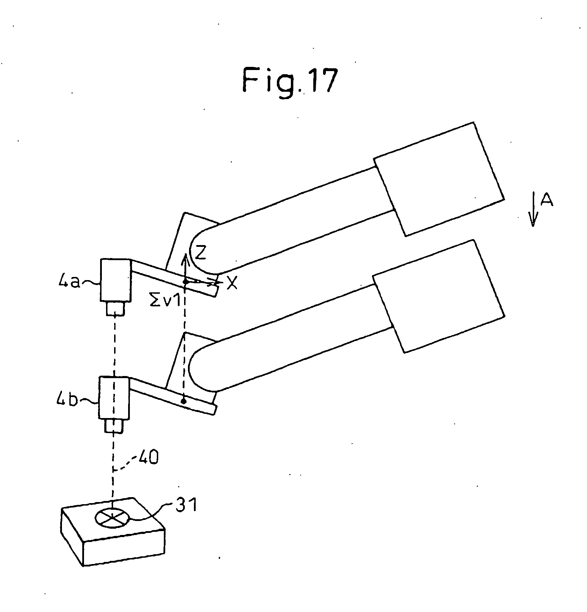

Fig. 17 is a diagram for explaining this process. In Fig. 17, the coordinate system Σv1 is assumed to determine the direction of the view line 40 and assumed to satisfy the following conditions.

(I) The coordinate system Σf and the coordinate system Σv1 have the same origin.
(II) The Z axis of the coordinate system Σv1 is coincident with the direction of the view line 40.

The direction of Z axis of the coordinate system Σv1 on the coordinate system Σf is determined at the time of completion of the predetermined point moving process. More specifically, the component (W, P) of the Euler's angle (W, P, R) indicating the posture of the coordinate system Σv1 on the coordinate system Σf is determined.

For this purpose, first, the translational motion is executed at step T4'. In the motion, the robot R1 is moved (arrow A) translationally to a position where the distance between the feature portion representing point 31 and the camera is different from the initial differences without changing the camera posture. In Fig. 17, reference numerals 4a, 4b designate the camera before and after movement, respectively.

[Steps T5', T6']

Generally, after translational motion at step T4', the image of the feature portion representing point 31 is displaced out of the predetermined point M again. Thus, the predetermined point moving process is executed again (step T5'). In the predetermined point moving process, as already described, the image of the feature portion representing point 31 is returned to the position within the tolerable error range from the predetermined point M again. Upon completion of step T5', the position Qf2 of the coordinate system Σf on the robot coordinate system Σb is acquired and stored (step T6').

[Step T7']

The straight line connecting the position Qf1 obtained at step T3' and the position Qf2 obtained at step T6' indicates the direction of the view line 40. If the relative covered movement from Qf1 to Qf2 as viewed on the coordinate system Σf before movement of the robot R1 at step T4' is dX, dY, dZ, the Euler's angle (W, P, R) indicating the posture of the coordinate system Σv1 on the coordinate system Σf is calculated as below. The coordinate system Σv1 is thus determined and the Z axis of this coordinate system indicates the direction of the view line 40.

$$W = \tan^{-1}\left(\frac{-dY}{\sqrt{(dX)^2 + (dZ)^2}}\right)$$

$$P = \tan^{-1}\left(\frac{dX}{dZ}\right)$$

$$R = 0$$

[Steps T8', T9', T10', T11']

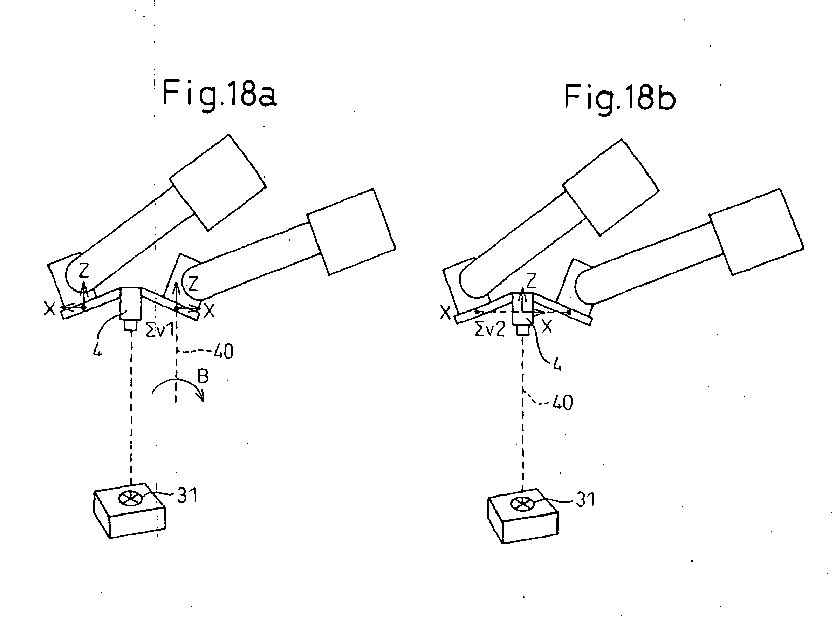

After determining the direction of the view line 40 at step T7', the process proceeds to the step of determining the position of the view line 40. Figs. 18a, 18b are diagrams for explaining the related process. In Fig. 18b, the coordinate system Σv2 indicates the position and direction of the view line 40, corresponds to the coordinate system Σv in Fig. 5 and satisfies the following conditions.

(III) The coordinate system Σv2 has the origin on the view line 40.
(IV) The Z axis of the coordinate system Σv2 coincides with the direction of the view line 40.

The direction of the view line 40 is already determined as Z axis in the posture of the coordinate system Σv1 (Fig. 18a) and the Z axis of the coordinate system Σv2 is in the same direction as the Z axis of the coordinate system Σv1. To determine the position of the origin, the robot R1 is moved to the position in which Qf1 is rotated by 180 degrees around the Z axis of the coordinate system Σv1 (step T8'), and then the predetermined point moving process is executed again (step T9'). Fig. 18a shows the state of the rotational movement (see arrow B) and the state in which the movement by the predetermined point moving process are completed, and Fig. 18b shows the position of the origin of the coordinate system Σv2. The position of the origin of the coordinate system Σv2 is given as the midpoint of the coordinate system Σf before and after the rotational movement.

After complete rotational movement, the position Qf3 of the robot R1 is acquired and stored (step T10'). The midpoint between Qf1 and Qf3 is determined as the origin of the coordinate system Σv2.

The relative covered movement from Qf1 to Qf3 as viewed on the coordinate system Σf before movement of the robot R1 at step T8' is assumed to be dX, dY, dZ, respectively, and the origin (X, Y, Z) of the coordinate system Σv2 as viewed on the coordinate system Σf is determined from the below equations. The posture of the coordinate system Σv2 is identical with that of the coordinate system Σv1, and therefore the position and posture of the coordinate system Σv2 as viewed on the coordinate system Σf before movement of the robot R1 at step T8' can be determined (step T11'). The matrix indicating this is hereinafter expressed as V.

$$X = dX/2$$

$$Y = dY/2$$

$$Z = dZ/2$$

[Steps T12', T13', T14', T15']

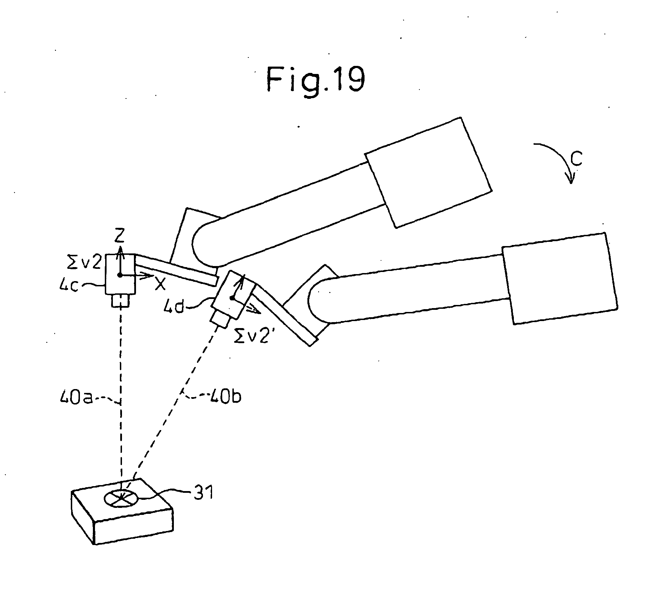

Finally, the process of determining the three-dimensional position of the feature portion representing point is executed using the position and posture of the view line 40. Fig. 19 is a diagram for explaining this process. The robot R1 is tilted and moved to the position where Qf1 is tilted around the Y axis of the coordinate system Σv2 (step T12').

Then, the predetermined point moving process is executed again (step T13'). Fig. 19 shows the state including the view line 40b after completion of this process (the coordinate system Σv2 is moved to the coordinate system Σv2'). Incidentally, the view line 40a designates the view line before the robot R1 is tilted and moved, and view line 40b designates the view line 40 after the robot R1 is tilted and moved. After completion of step T13', the position Qf4 of the robot R1 is acquired (step T14') and stored.

The Σv2 as viewed from the coordinate system Σf when the robot R1 is positioned at position Qf1 (step T3') is represented as V, while the Σv2' when the robot R1 is positioned at position Qf4 is represenrated as

$$Qf1^{-1} \cdot Qf4 \cdot V$$

By determining the intersection between the Z axes of the two coordinate systems from these equations, the three-dimensional position of the feature portion representing point (the target to be measured) 31 at the robot position Qf1 can be determined. This is converted into Vf using the robot position Qf1 thereby to determine the position Vf of the feature portion representing point 31 as viewed from the coordinate system Σf (step T15').

In the present invention, the size of the feature portion 30 on the light-receiving surface at the robot position Qf1 is the same as the "target value in size" stored in step f4.

It is thus understood from the foregoing description of the invention that the calibration can be carried out to determine the relative positions of the robots without any calibration jig. Also, according to the invention, the calibration can be effected in non-contact and simple way with high accuracy. As a result, in the robot system using a plurality of robots at the same time, the teaching cost and the jig-related costs that have thus far been paid by the user are reduced.

## Claims

1. A robot system including a first robot (R1) having a first robot coordinate system (Σb) set therein and a second robot (R2) having a second robot coordinate system (Σb') set therein; **characterized in that** the robot system comprises:

    a measuring unit including a light-receiving device (4) mounted on selected one of the first robot (R1) or an object mounted on the first robot (R1);
    at least one robot control unit (5, 6) comprising means adapted for setting the first robot (R1) and the second robot (R2) at each position in their initial states, respectively;
    a CPU (20) in an image processing unit (2) connected with the at least one robot control unit comprising means adapted for detecting, with the light-receiving device (4), a feature portion (30) mounted on selected one of the second robot (R2) or an object on the second robot (R2), and detecting the feature portion (30) imaged on the light-receiving surface of the light-receiving device (4);
    means adapted for determining, based on the result of the detection, the distance to be covered by the second robot (R2) in such a manner that the position and the size of the feature portion (30) on the light-receiving surface is coincident with a predetermined target value;
    the at least one robot control unit (6) comprises means adapted for moving the second robot (R2) in accordance with the determined distance to be covered by the second robot (R2);
    a memory (12) of the at least one robot control unit comprising means adapted for acquiring and storing the position information of the second robot (R2) after movement; and
    a main CPU (11) of the at least one robot control unit comprising means (11) adapted for determining a matrix indicating the coordinate conversion from the first robot coordinate system (Σb) to the second robot coordinate system (Σb') using the position information of the second robot (R2) stored for each initial state after movement and the position information of the first robot in the initial states in the case where at least three initial states are given, whereby the at least three initial positions of the first robot (R1) and the at least three initial positions of the second robot (R2) are prohibited from being aligned on one straight line.

2. A robot system according to claim 1, the main CPU (11) further comprises:

    coincidence determining means (11) adapted for determining that the position and the size, on the light-receiving surface of the light-receiving device (4), of the feature portion (30) imaged on the light-receiving surface is coincident with the target value within a predetermined error after movement of the second robot (R2) and before acquiring and storing the position of the second robot (R2).

3. A robot system according to claim 2, the main CPU (11) further comprises:

means (11) adapted for setting the second robot (R2) at the position of the initial state again in the case where the coincidence determining means fails to determine the coincidence within the predetermined tolerable error range.

4. A robot system including a first robot (R1) having a first robot coordinate system (Σb) set therein and a second robot (R2) having a second robot coordinate system (Σb') set therein; **characterized in that** the robot system comprising:

a measuring unit including a light-receiving device (4) mounted on selected one of the first robot (R1) or an object mounted on the first robot (R1);

at least one robot control unit (5, 6) comprising means adapted for setting the first robot (R1) and the second robot (R2) at each position of initial states, respectively;

a CPU (20) in an image processing unit (2) connected with the at least one robot control unit comprising means adapted for detecting, with the light-receiving device (4), a feature portion (30) mounted on selected one of the second robot (R2) or an object mounted on the second robot (R2), and detecting the feature portion (30) imaged on the light-receiving surface of the light-receiving device (4);

means adapted for determining, based on the result of the detection, the distance to be covered by the first robot (R1) in such a manner that the position and the size of the feature portion (30) on the light-receiving surface is coincident with a predetermined target value;

the at least one robot control unit (5) comprises means adapted for moving the first robot (R1) in accordance with the determined distance to be covered by the first robot (R1);

a memory (12) of the at least one robot control unit comprising means adapted for acquiring and storing the position information of the first robot (R1) after movement; and

a main CPU (11) of the at least one robot control unit comprising means adapted for determining a matrix indicating the coordinate conversion from the first robot coordinate system (Σb) to the second robot coordinate system (Σb') using the position information of the first robot (R1) stored for each initial state after movement and the position information of the second robot in the initial states in the case where at least three initial states are given, whereby the at least three initial positions of the first robot (R1) and the at least three initial positions of the second robot (R2) are prohibited from being aligned on one straight line.

5. A robot system according to claim 4, the main CPU (11) further comprises:

coincidence determining means (11) adapted for determining that the position and the size, on the light-receiving surface of the light-receiving device (4), of the feature portion (30) imaged on the light-receiving surface is coincident with a predetermined target value within a predetermined error after movement of the first robot (R1) before acquiring and storing the position of the first robot (R1).

6. A robot system according to claim 5, the main CPU (11) further comprises:

means (11) adapted for setting the first robot (R1) at a position in the initial state again in the case where the coincidence determining means fails to determine the coincidence within the predetermined tolerable error range.

7. A robot system according to any one of claims 1 to 6, wherein the first robot (R1) is connected to a first robot control unit (5), and the second robot (R2) is connected to a second robot control unit (6) different from the first robot control unit (5), and wherein the first robot control unit (5) and the second robot control unit (6) are connected to each other through a communication means.

8. A robot system according to any one of claims 1 to 6, wherein the first robot (R1) and the second robot (R2) are connected to the same robot control unit (1).

9. A robot system according to any one of claims 1 to 8, wherein the measuring unit is mounted temporarily when calculating the relative positions between the first robot (R1) and the second robot (R2).

10. A robot system according to any one of claims 1 to 8, wherein the feature portion (30) is mounted temporarily when calculating the relative positions between the first robot (R1) and the second robot (R2).

11. A robot system according to any one of claims 1 to 10, wherein the light-receiving device (4) is a camera for capturing a two-dimensional image.

12. A robot system according to any one of claims 1 to 10,

wherein the light-receiving device (4) is a PSD.

**Patentansprüche**

**1.** Robotersystem mit einem ersten Roboter (R1), auf den sich ein erstes Roboterkoordinatensystem (Σb) bezieht, und einem zweiter Roboter (R2), auf den sich ein zweites Roboterkoordinatensystem (Σb') bezieht; **dadurch gekennzeichnet, dass** das Robotersystem aufweist:

eine Messeinheit mit einer Licht-empfangenden Vorrichtung (4), die an dem ersten Roboter (R1) oder an einem an dem ersten Roboter (R1) angebrachten Objekt angebracht ist;
mindestens eine Robotersteuerungseinheit (5, 6) mit Mitteln, die dazu eingerichtet sind, jeweils den ersten Roboter (R1) und den zweiten Roboter (R2) aus jeder Position in ihre Anfangszustände zu versetzen;
eine CPU (20) in einer Bildverarbeitungseinheit (2), die mit der mindestens einen Robotersteuerungseinheit verbunden ist, und Mittel aufweist, die dazu eingerichtet sind, mit der Licht-empfangenden Vorrichtung (4) ein Kennzeichenteil (30) zu erfassen, welches an einem ausgewählten des zweiten Roboters (R2) oder einem Objekt an dem zweiten Roboter (R2) angebracht ist, und das auf der Licht-empfangenden Oberfläche der Licht-empfangenden Vorrichtung (4) abgebildete Kennzeichenteil (30) zu erfassen;
Mittel, die dazu eingerichtet sind, basierend auf dem Ergebnis der Erfassung, die von dem zweiten Roboter (R2) zurückzulegende Wegstrecke auf eine solche Weise zu bestimmen, dass die Position und die Größe des Kennzeichenteils (30) auf der Licht-empfangenden Oberfläche mit einem vorbestimmten Zielwert übereinstimmt;
wobei die mindestens eine Robotersteuerungseinheit (6) Mittel aufweist, die dazu eingerichtet sind, den zweiten Roboter (R2) in Übereinstimmung mit der bestimmten von dem zweiten Roboter (R2) zurückzulegenden Wegstrecke zu bewegen;
einen Speicher (12) der mindestens einen Robotersteuerungseinheit mit Mitteln, die dazu eingerichtet sind, nach der Bewegung die Positionsinformation des zweiten Roboters (R2) zu erlangen und zu speichern; und
eine Haupt-CPU (11) der mindestens einen Robotersteuerungseinheit mit Mitteln (11), die dazu eingerichtet sind, eine Matrix zu bestimmen, welche die Koordinatenumwandlung von dem ersten Roboterkoordinatensystem (Σb) in das zweite Roboterkoordinatensystem (Σb') angibt, unter Verwendung der für jeden Anfangszustand nach der Bewegung gespeicherten Positions-

tionsinformation des zweiten Roboters (R2) und der Positionsinformation des ersten Roboters in den Anfangszuständen, falls mindestens drei Anfangszustände gegeben sind, wobei es untersagt ist, dass die mindestens drei Anfangspositionen des ersten Roboters (R1) und die mindestens drei Anfangspositionen des zweiten Roboters (R2) auf einer geraden Linie ausgerichtet sind.

**2.** Robotersystem nach Anspruch 1, bei dem die Haupt-CPU (11) ferner aufweist:

Übereinstimmungsbestimmungsmittel (11), die dazu eingerichtet sind, um zu bestimmen, ob nach dem Bewegen des zweiten Roboters (R2) und vor dem Erlangen und Speichern der Position des zweiten Roboters (R2) die Position und die Größe des auf die Licht-empfangende Oberfläche abgebildeten Kennzeichenteils (30) auf der Licht-empfangenden Oberfläche der Licht-empfangenden Vorrichtung (4) innerhalb eines vorbestimmten Fehlers mit dem Zielwert übereinstimmt.

**3.** Robotersystem nach Anspruch 2, wobei die Haupt-CPU (11) ferner aufweist:

Mittel (11), die dazu eingerichtet sind, den zweiten Roboter (R2) wieder in die Position des Anfangszustandes zu versetzen, falls es den Übereinstimmungsbestimmungsmitteln nicht gelingt, die Übereinstimmung innerhalb des vorbestimmten tolerierbaren Fehlerbereichs zu bestimmen.

**4.** Robotersystem mit einem ersten Roboter (R1), auf den sich ein erstes Roboterkoordinatensystem (Σb) bezieht, und einem zweiter Roboter (R2), auf den sich ein zweites Roboterkoordinatensystem (Σb') bezieht; **dadurch gekennzeichnet, dass** das Robotersystem aufweist:

eine Messeinheit mit einer Licht-empfangenden Vorrichtung (4), die an dem ersten Roboter (R1) oder einem an dem ersten Roboter (R1) angebrachten Objekt angebracht ist;
mindestens eine Robotersteuerungseinheit (5, 6) mit Mitteln, die dazu eingerichtet sind, jeweils den ersten Roboter (R1) und den zweiten Roboter (R2) aus jeder Position in ihre Anfangszustände zu versetzen;
eine CPU (20) in einer Bildverarbeitungseinheit (2), die mit der mindestens einen Robotersteuerungseinheit verbunden ist, und Mittel aufweist, die dazu eingerichtet sind, mit der Licht-empfangenden Vorrichtung (4) ein Kennzeichenteil (30) zu erfassen, welches an dem zweiten Roboter (R2) oder an einem an dem zweiten Roboter (R2) angebrachten Objekt angebracht ist, und das auf der Licht-empfangenden Oberfläche der Licht-empfangenden Vorrichtung (4) abgebildete Kennzeichenteil (30) zu erfassen;

Mittel, die dazu eingerichtet sind, basierend auf dem Ergebnis der Erfassung, die von dem ersten Roboter (R1) zurückzulegende Wegstrecke auf eine solche Weise zu bestimmen, dass die Position und die Größe des Kennzeichenteils (30) auf der Licht-empfangenden Oberfläche mit einem vorbestimmten Zielwert übereinstimmt;

wobei die mindestens eine Robotersteuerungseinheit (5) Mittel aufweist, die dazu eingerichtet sind, den ersten Roboter (R1) in Übereinstimmung mit der bestimmten von dem ersten Roboter (R1) zurückzulegenden Wegstrecke zu bewegen;

einen Speicher (12) der mindestens einen Robotersteuerungseinheit mit Mitteln, die dazu eingerichtet sind, nach der Bewegung die Positionsinformation des ersten Roboters (R1) zu erlangen und zu speichern; und

eine Haupt-CPU (11) der mindestens einen Robotersteuerungseinheit mit Mitteln, die dazu eingerichtet sind, eine Matrix zu bestimmen, welche die Koordinatenumwandlung von dem ersten Roboterkoordinatensystem (Σb) in das zweite Roboterkoordinatensystem (Σb') angibt, unter Verwendung der für jeden Anfangszustand nach der Bewegung gespeicherten Positionsinformation des ersten Roboters (R1) und der Positionsinformation des zweiten Roboters in den Anfangszuständen, falls mindestens drei Anfangszustände gegeben sind, wobei es untersagt ist, dass die mindestens drei Anfangspositionen des ersten Roboters (R1) und die mindestens drei Anfangspositionen des zweiten Roboters (R2) auf einer geraden Linie ausgerichtet sind.

5. Robotersystem nach Anspruch 4, wobei die Haupt-CPU (11) ferner aufweist:

Übereinstimmungsbestimmungsmittel (11), die dazu eingerichtet sind, um zu bestimmen, ob nach dem Bewegen des ersten Roboters (R1) und vor dem Erlangen und Speichern der Position des ersten Roboters (R1) die Position und die Größe des auf die Licht-empfangende Oberfläche abgebildeten Kennzeichenteils (30) auf der Licht-empfangenden Oberfläche der Licht-empfangenden Vorrichtung (4) innerhalb eines vorbestimmten Fehlers mit dem Zielwert übereinstimmt.

6. Robotersystem nach Anspruch 5, wobei die Haupt-CPU (11) ferner aufweist:

Mittel (11), die dazu eingerichtet sind, den ersten Roboter (R1) wieder in eine Position in den Anfangszustand zu versetzen, falls es den Übereinstimmungsbestimmungsmitteln nicht gelingt, die Übereinstimmung innerhalb des vorbestimmten tolerierbaren Fehlerbereichs zu bestimmen.

7. Robotersystem nach einem der Ansprüche 1 bis 6, bei dem der erste Roboter (R1) mit einer ersten Robotersteuerungseinheit (5) verbunden ist, und der zweite Roboter (R2) mit einer zweiten Robotersteuerungseinheit (6) verbunden ist, die von der ersten Robotersteuerungseinheit (5) verschieden ist, und bei dem die erste Robotersteuerungseinheit (5) und die zweite Robotersteuerungseinheit (6) über ein Kommunikationsmittel miteinander verbunden sind.

8. Robotersystem nach einem der Ansprüche 1 bis 6, bei dem der erste Roboter (R1) und der zweite Roboter (R2) mit der selben Robotersteuerungseinheit (1) verbunden sind.

9. Robotersystem nach einem der Ansprüche 1 bis 8, bei dem die Messeinheit zeitweise beim Berechnen der relativen Positionen zwischen dem ersten Roboter (R1) und dem zweiten Roboter (R2) angebracht ist.

10. Robotersystem nach einem der Ansprüche 1 bis 8, bei dem das Kennzeichenteil (30) zeitweise beim Berechnen der relativen Positionen zwischen dem ersten Roboter (R1) und dem zweiten Roboter (R2) angebracht ist.

11. Robotersystem nach einem der Ansprüche 1 bis 10, bei dem die Licht-empfangende Vorrichtung (4) eine Kamera zum Aufnehmen eines zweidimensionalen Bildes ist.

12. Robotersystem nach einem der Ansprüche 1 bis 10, bei dem die Licht-empfangende Vorrichtung (4) ein PSD ist.

**Revendications**

1. Système robotisé incluant un premier robot (R1) comportant un premier système de coordonnées de robot (Σb) défini dans celui-ci et un deuxième robot (R2) comportant un deuxième système de coordonnées de robot (Σb') défini dans celui-ci ; **caractérisé en ce que** le système robotisé comprend :

une unité de mesure incluant un dispositif de réception de lumière (4) monté sur l'un au choix du premier robot (R1) ou d'un objet monté sur le premier robot (R1) ;

au moins une unité de commande de robot (5, 6) comprenant un moyen adapté pour régler respectivement le premier robot (R1) et le deuxième robot (R2) à chaque position dans leurs états initiaux ;

une Unité Centrale CPU (20) se trouvant dans une unité de traitement d'image (2) connectée avec la au moins une unité de commande de robot comprenant un moyen adapté pour détecter, avec le dispositif de réception de lumière (4), une portion de caractéristique (30) montée sur l'un au choix du deuxième robot (R2) ou d'un objet se trouvant sur le deuxième robot (R2), et détecter la portion de caractéristique (30) imagée sur la surface de réception de lumière du dispositif de réception de lumière (4) ;

un moyen adapté pour déterminer, sur la base du résultat de la détection, la distance à couvrir par le deuxième robot (R2) d'une manière telle que la position et la taille de la portion de caractéristique (30) se trouvant sur la surface de réception de lumière soient identiques à une valeur cible prédéterminée ;

la au moins une unité de commande de robot (6) comprend un moyen adapté pour déplacer le deuxième robot (R2) en conformité avec la distance prédéterminée à couvrir par le deuxième robot (R2) ;

une mémoire (12) de la au moins une unité de commande de robot comprenant un moyen adapté pour acquérir et stocker les informations de position du deuxième robot (R2) après un mouvement ; et

une CPU principale (11) de la au moins une unité de commande de robot comprenant un moyen (11) adapté pour déterminer une matrice indiquant la conversion de coordonnées à partir du premier système de coordonnées de robot ($\Sigma b$) en le deuxième système de coordonnées de robot ($\Sigma b'$) en utilisant les informations de position du deuxième robot (R2) stockées pour chaque état initial après un mouvement et les informations de position du premier robot dans les états initiaux dans le cas où au moins trois états initiaux sont donnés, ce qui interdit que les au moins trois positions initiales du premier robot (R1) et les au moins trois positions initiales du deuxième robot (R2) se trouvent alignées sur une ligne droite.

2. Système robotisé selon la revendication 1, la CPU principale (11) comprenant en outre :

un moyen de détermination de coïncidence (11) adapté pour déterminer que la position et la taille, sur la surface de réception de lumière du dispositif de réception de lumière (4), de la portion de caractéristique (30) imagée sur la surface de réception de lumière sont identiques à la valeur cible à l'intérieur d'une erreur prédéterminée après un mouvement du deuxième robot (R2) et avant d'acquérir et de stocker la position du deuxième robot (R2).

3. Système robotisé selon la revendication 2, la CPU principale (11) comprenant en outre :

un moyen (11) adapté pour régler le deuxième robot (R2) à la position de l'état initial de nouveau dans le cas où le moyen de détermination de coïncidence ne parvient pas à déterminer la coïncidence à l'intérieur de la plage d'erreur tolérable prédéterminée.

4. Système robotisé incluant un premier robot (R1) comportant un premier système de coordonnées de robot ($\Sigma b$) défini dans celui-ci et un deuxième robot (R2) comportant un deuxième système de coordonnées de robot ($\Sigma b'$) défini dans celui-ci ; **caractérisé en ce que** le système robotisé comprend :

une unité de mesure incluant un dispositif de réception de lumière (4) monté sur l'un au choix du premier robot (R1) ou d'un objet monté sur le premier robot (R1) ;

au moins une unité de commande de robot (5, 6) comprenant un moyen adapté pour régler respectivement le premier robot (R1) et le deuxième robot (R2) à chaque position d'états initiaux ;

une CPU (20) se trouvant dans une unité de traitement d'image (2) connectée avec la au moins une unité de commande de robot comprenant un moyen adapté pour détecter, avec le dispositif de réception de lumière (4), une portion de caractéristique (30) montée sur l'un au choix du deuxième robot (R2) ou d'un objet se trouvant sur le deuxième robot (R2), et détecter la portion de caractéristique (30) imagée sur la surface de réception de lumière du dispositif de réception de lumière (4) ;

un moyen adapté pour déterminer, sur la base du résultat de la détection, la distance à couvrir par le premier robot (R1) d'une manière telle que la position et la taille de la portion de caractéristique (30) se trouvant sur la surface de réception de lumière soient identiques à une valeur cible prédéterminée ;

la au moins une unité de commande de robot (5) comprend un moyen adapté pour déplacer le premier robot (R1) en conformité avec la distance prédéterminée à couvrir par le premier robot (R1) ;

une mémoire (12) de la au moins une unité de commande de robot comprenant un moyen adapté pour acquérir et stocker les informations de position du premier robot (R1) après un mouvement ; et

une CPU principale (11) de la au moins une unité de commande de robot comprenant un moyen adapté pour déterminer une matrice indiquant la conversion de coordonnées à partir du premier système de coordonnées de robot (Σb) en le deuxième système de coordonnées de robot (Σb') en utilisant les informations de position du premier robot (R1) stockées pour chaque état initial après un mouvement et les informations de position du deuxième robot dans les états initiaux dans le cas où au moins trois états initiaux sont donnés, ce qui interdit que les au moins trois positions initiales du premier robot (R1) et les au moins trois positions initiales du deuxième robot (R2) se trouvent alignées sur une ligne droite.

5. Système robotisé selon la revendication 4, la CPU principale (11) comprenant en outre :

un moyen de détermination de coïncidence (11) adapté pour déterminer que la position et la taille, sur la surface de réception de lumière du dispositif de réception de lumière (4), de la portion de caractéristique (30) imagée sur la surface de réception de lumière sont identiques à la valeur cible à l'intérieur d'une erreur prédéterminée après un mouvement du premier robot (R1) avant d'acquérir et de stocker la position du premier robot (R1).

6. Système robotisé selon la revendication 5, la CPU principale (11) comprenant en outre :

un moyen (11) adapté pour régler le premier robot (R1) à la position de l'état initial de nouveau dans le cas où le moyen de détermination de coïncidence ne parvient pas à déterminer la coïncidence à l'intérieur de la plage d'erreur tolérable prédéterminée.

7. Système robotisé selon l'une quelconque des revendications 1 à 6,
dans lequel le premier robot (R1) est connecté à une première unité de commande de robot (5), et le deuxième robot (R2) est connecté à une deuxième unité de commande de robot (6) différente de la première unité de commande de robot (5), et
dans lequel la première unité de commande de robot (5) et la deuxième unité de commande de robot (6) sont connectées l'une à l'autre par l'intermédiaire d'un moyen de communication.

8. Système robotisé selon l'une quelconque des revendications 1 à 6,

dans lequel le premier robot (R1) et le deuxième robot (R2) sont connectés à la même unité de commande de robot (1).

9. Système robotisé selon l'une quelconque des revendications 1 à 8,
dans lequel l'unité de mesure est montée temporairement lors du calcul des positions relatives entre le premier robot (R1) et le deuxième robot (R2).

10. Système robotisé selon l'une quelconque des revendications 1 à 8,
dans lequel la portion de caractéristique (30) est montée temporairement lors du calcul des positions relatives entre le premier robot (R1) et le deuxième robot (R2).

11. Système robotisé selon l'une quelconque des revendications 1 à 10,
dans lequel le dispositif de réception de lumière (4) est une caméra destinée à relever une image en deux dimensions.

12. Système robotisé selon l'une quelconque des revendications 1 à 10,
dans lequel le dispositif de réception de lumière (4) est un PSD.

# Fig.1

# Fig.2

# Fig.3

2

CPU — 20

21 — 50 26

ROM ⟺ FRAME MEMORY

22 27

IMAGE PROCESSOR ⟺ NONVOLATILE MEMORY

23 28

TO CAMERA ⟺ CAMERA I/F ⟺ RAM

24 29

MONITOR I/F ⟺ COMMUNICATION I/F ⟺ TO ROBOT CONTROL UNIT

25

INPUT/OUTPUT DEVICE ⟺

# Fig.4

```
        ( START )
            │
┌───────────────────────────────────┐
│ MOVE ROBOT R1/R2 INTO TARGET VALUE │  F1
│ SETTING REFERENCE STATE            │
└───────────────────────────────────┘
            │
┌───────────────────────────────────┐
│ DETECT POSITION AND TWO-DIMENSIONAL│
│ FEATURE AMOUNT OF FEATURE PORTION  │  F2
│ AND STORE(SET) AS A TARGET VALUE   │
└───────────────────────────────────┘
            │
┌───────────────────────────────────┐
│ DETERMINE AND STORE POSITION Sf' OF│
│ FEATURE PORTION AS VIEWED FROM      │  F3
│ COORDINATE SYSTEM Σf' OF ROBOT R2   │
└───────────────────────────────────┘
            │
┌───────────────────────────────────┐
│ DETERMINE POSITION OF FEATURE PORTION│
│ AS VIEWED FROM COORDINATE SYSTEM    │  F4
│ Σb OF ROBOT R1                      │
└───────────────────────────────────┘
            │
┌───────────────────────────────────┐
│ DETERMINE AND STORE POSITION Vf     │
│ OF FEATURE PORTION AS VIEWED FROM   │  F5
│ COORDINATE SYSTEM Σf OF ROBOT R1    │
└───────────────────────────────────┘
            │
        ( END )
```

# Fig.5

# Fig.6

# Fig.7

START

| | |
|---|---|
| MOVE ROBOT R1/R2 INTO FIRST INITIAL STATE | G1 |

| | |
|---|---|
| MOVE ROBOT R1 SO THAT FEATURE PORTION ASSUME TARGET VALUE ON IMAGE | G2 |

| | |
|---|---|
| STORE PRESENT POSITION P1 AS VIEWED FROM COORDINATE SYSTEM $\Sigma$b OF ROBOT R1 AND PRESENT POSITION Q1 AS VIEWED FROM COORDINATE SYSTEM $\Sigma$b' OF ROBOT R2 | G3 |

| | |
|---|---|
| ACQUIRE AND STORE P2, Q2 TO PN, QN BY REPEATING G1 TO G3 N TIMES (N$\geq$3) WHILE CHANGING INITIAL STATE | G4 |

| | |
|---|---|
| ACQUIRE AND STORE T INDICATING CONVERSION FROM ROBOT COORDINATE SYSTEM $\Sigma$b TO ROBOT COORDINATE SYSTEM $\Sigma$b' | G5 |

END

# Fig. 8

# Fig.9

START

DETECT FEATURE PORTION FROM IMAGING/
IMAGE PROCESSING OPERATION  S1

DEVIATION FROM TARGET VALUE
WITHIN TOLERABLE ERROR RANGE?  S2  Y

N

DETERMINE DISTANCE TO BE COVERED
BY TRANSLATIONAL MOVEMENT OF ROBOT
R1 TO ACHIEVE TARGET VALUE  S3

MOVE ROBOT R1 TRANSLATIOLLY  S4

END

# Fig.10

R1

R2

40

30

T

Σb

Σb'

CONTROL UNIT

1

## Fig.11

```
                    ( START )
                        |
  MOVE ROBOT TO INITIAL POSITION    T1
                        |
  EXECUTE PREDETERMINED POINT MOVING PROCESS    T2
                        |
  OBTAIN AND STORE Qf1    T3
                        |
  MOVE ROBOTS TRANSLATIONALLY TO POSITIONS
  OF DIFFERENT DISTANCES FROM CAMERA    T4
                        |
  EXECUTE PREDETERMINED POINT MOVING PROCESS    T5
                        |
  OBTAIN AND STORE Qf2    T6
                        |
  CALCULATE Σv1 FROM Qf1,Qf2    T7
                        |
  MOVE ROBOT TO POSITION WHERE Qf1 IS ROTATED
  180 DEGREES AROUND Z AXIS OF Σv1    T8
                        |
  EXECUTE PREDETERMINED POINT MOVING PROCESS    T9
                        |
  OBTAIN AND STORE Qf3    T10
                        |
  CALCULATE Σv2 FROM Qf1,Qf3    T11
                        |
  MOVE ROBOT TO POSITION WHERE Qf1 IS TILTED
  AROUND Y AXIS OF Σv2    T12
                        |
  EXECUTE PREDETERMINED POINT MOVING PROCESS    T13
                        |
  OBTAIN AND STORE Qf4    T14
                        |
  CALCULATE REPRESENTING POINT 31 FROM Σv2
  WITH ROBOTS POSITIONED AT Qf1,Qf4    T15
                        |
                    ( END )
```

# Fig.12

# Fig.13

Fig.14b

Fig.14a

# Fig.15

# Fig.16

START

| MOVE ROBOT TO INITIAL POSITION | T1' |

| EXECUTE PREDETERMINED POINT MOVING PROCESS | T2' |

| OBTAIN AND STORE Qf1 | T3' |

| MOVE ROBOTS TRANSLATIONALLY TO POSITIONS OF DIFFERENT DISTANCES FROM TARGET | T4' |

| EXECUTE PREDETERMINED POINT MOVING PROCESS | T5' |

| OBTAIN AND STORE Qf2 | T6' |

| CALCULATE $\Sigma v1$ FROM Qf1,Qf2 | T7' |

| MOVE ROBOT TO POSITION WHERE Qf1 IS ROTATED 180 DEGREES AROUND Z AXIS OF $\Sigma v1$ | T8' |

| EXECUTE PREDETERMINED POINT MOVING PROCESS | T9' |

| OBTAIN AND STORE Qf3 | T10' |

| CALCULATE $\Sigma v2$ FROM Qf1,Qf3 | T11' |

| MOVE ROBOT TO POSITION WHERE Qf1 IS TILTED AROUND Y AXIS OF $\Sigma v2$ | T12' |

| EXECUTE PREDETERMINED POINT MOVING PROCESS | T13' |

| OBTAIN AND STORE Qf4 | T14' |

| CALCULATE 3D POSITION OF THE TARGET FROM $\Sigma v2$ WITH ROBOTS POSITIONED AT Qf1,Qf4 | T15' |

END

# Fig.17

Fig.18a

Fig.18b

Fig.19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8129408 A
- WO 03039817 A1
- JP 2004113451 A
- JP 2004009848 A